**Europäisches Patentamt**

**European Patent Office**

**Office européen des brevets**

(11) Veröffentlichungsnummer: **0 224 741 B1**

# EUROPÄISCHE PATENTSCHRIFT

(45) Veröffentlichungstag der Patentschrift: **20.03.91**

(51) Int. Cl.⁵: **G01F 1/68**

(21) Anmeldenummer: **86115313.8**

(22) Anmeldetag: **05.11.86**

Teilanmeldung 89118931.8 eingereicht am 05/11/86.

---

(54) **Vorrichtung zur thermischen Massenstrommessung von Gasen und Flüssigkeiten.**

---

(30) Priorität: **04.12.85 DE 3542788**

(43) Veröffentlichungstag der Anmeldung:
**10.06.87 Patentblatt 87/24**

(45) Bekanntmachung des Hinweises auf die Patenterteilung:
**20.03.91 Patentblatt 91/12**

(84) Benannte Vertragsstaaten:
**AT BE CH DE FR GB IT LI LU NL**

(56) Entgegenhaltungen:
DE-A- 3 326 047
DE-A- 3 431 952
US-A- 3 927 567
US-A- 4 135 396

(73) Patentinhaber: **Degussa Aktiengesellschaft**
**Weissfrauenstrasse 9**
**W-6000 Frankfurt am Main 1(DE)**

(72) Erfinder: **Eiermann, Kurt, Dr.**
**Friedhofstrasse 26**
**W-6102 Pfungstadt(DE)**
Erfinder: **Göbel, Reiner**
**Schanzenstrasse 7**
**W-6450 Hanau 11(DE)**
Erfinder: **Gries, Peter**
**Eichendorffstrasse 19**
**W-6071 Götzenhain(DE)**
Erfinder: **Hohenstatt, Martin, Dr.**
**Unter den Weingärten 9**
**W-6451 Hammersbach(DE)**

---

## Beschreibung

Die Erfindung betrifft eine Vorrichtung zur thermischen Massenstrommessung von Gasen und Flüssigkeiten in Rohrleitungen mit mindestens zwei temperaturabhängigen Dünnfilmwiderständen, die als Meß- und Referenzwiderstände Teil einer Brückenschaltung sind, in Wärmekontakt mit dem strömenden Medium stehen und von denen mindestens einer mit Hilfe einer Regelschaltung elektrisch beheizt wird.

In der Verfahrenstechnik wird für eine optimale Prozeßsteuerung wie auch für eine genaue Mengenbilanzierung der Massenstrom von am Prozeß beteiligten Gasen und Flüssigkeiten benötigt. Die Anforderungen an die entsprechenden Meßgeräte sind neben einer hohen Meßgenauigkeit über den gesamten Meßbereich und schneller Ansprechzeit vor allem einfache Handhabbarkeit und Unempfindlichkeit gegen chemisch aggressive Medien bei unter Umständen hohen Temperaturen.

Es sind für diesen Anwendungsbereich bereits zahlreiche Durchflußmeßeinrichtungen in Form von Meßblenden oder Venturidüsen mit entsprechenden Differenzdruckmeßgeräten vorgeschlagen worden. Bekannt sind auch Meßgeräte nach dem Schwebekörperprinzip und der Wirbelablösung. Diese Meßgeräte erlauben nur die Messung des Volumenstroms und erfordern für die Massenstrommessung eine Dichtekorrektur. Außerdem sind sie meist sehr störungsanfällig und nicht leicht handhabbar beim Einbau in Rohrleitungen.

Es sind auch thermische Massenstrommesser nach dem Prinzip des Hitzedraht- oder Heißfilmanometers beschrieben worden. Das Meßprinzip erlaubt die direkte Messung des Massenstroms und ermöglicht eine hohe Meßgenauigkeit über einen großen Meßbereich bei gleichzeitiger schneller Ansprechzeit. Ein Nachteil dieser Vorrichtungen besteht darin, daß Meßfühler, Meßrohr und eventuell notwendige, strömungsbeeinflussende Elemente eine untrennbare Einheit darstellen. Dies erschwert den Einbau in schon bestehende Rohrleitungen und erlaubt einen Ausbau, z.B. zu Reinigungs- und Reparaturzwecken, nur bei abgeschalteter Anlage.

Außerdem sind die Meßergebnisse dieser Vorrichtungen von den Vorlaufbedingungen abhängig, d.h. von den Strömungsbedingungen in der Rohrleitung vor dem Meßgerät. Der Einbau von Waben oder Sieben vor dem Meßfühler mindert zwar diese Abhängigkeit, führt aber zu Druckverlusten und zu Schmutzablagerungen bei verschmutzten Gasen und Flüssigkeiten.

Aus der DE-OS 33 26 047 ist eine Luftmassenmeßvorrichtung mit einer elektronischen Regelschaltung für Rohrleitungen bekannt, bestehend aus einem temperaturabhängigen Meßwiderstand und einem Referenzwiderstand als Element einer gemeinsamen Brückenschaltung, wobei ein zylindrischer Trägerkörper einen rechteckigen Durchbruch parallel zur Strömungsrichtung aufweist, in dem der Meßwiderstand befestigt ist. Diese Vorrichtung ist zwar relativ leicht handhabbar beim Ein- und Ausbau in Rohrleitungen, die Meßergebnisse besitzen aber noch eine relativ große Abhängigkeit von den Vorlaufbedingungen und sind bei Verwendung von Dünnfilmwiderständen empfindlich auf einen parallelen Einbau der Dünnfilmwiderstände zur Strömungsrichtung.

In der DE-OS 3431952 wird eine Gasströmungs-Meßvorrichtung beschrieben, bei der ein Widerstand parallel zur Gasströmungsrichtung in einem Meßrohr angeordnet ist. Dieses mit einer definierten zylindrischen Wandung versehene Meßrohr verhindert aber nicht, daß die Meßergebnisse von den Vorlaufbedingungen abhängig sind. Daher ist ein Ausrichtungsgitter zur Vergleichmäßigung der Luftströmung erforderlich. Das Meßrohr hat dabei ein Längen-zu-Durchmesserverhältnis von mehr als zwei.

Es war daher Aufgabe der vorliegenden Erfindung, eine Vorrichtung zur thermischen Massenstrommessung von Gasen und Flüssigkeiten in Rohrleitungen zu entwickeln, mit mindestens zwei temperaturabhängigen Dünnfilmwiderständen, die als Meß- und Referenzwiderstände Teil einer Brückenschaltung sind, in Wärmekontakt mit dem strömenden Medium .stehen und von denen mindestens einer mit Hilfe einer Regelschaltung elektrisch beheizt wird. Diese Vorrichtung sollte bei schneller Ansprechzeit und großem Meßbereich eine hohe Meßgenauigkeit erbringen, unabhängig von den Vorlaufbedingungen und einem genau parallelen Einbau der Dünnfilmwiderstände zur Strömungsrichtung.

Diese Aufgabe wird erfindungsgemäß dadurch gelöst, daß die Dünnfilmwiderstände samt Anschlußleitungen jeweils von einem Schutzrohr umgeben sind, das im Bereich des Dünnfilmwiderstandes in Strömungsrichtung mit einer zylindrischen senkrecht zur Schutzrohrachse verlaufenden Durchbohrung versehen ist, deren Verhältnis Länge zu Durchmesser größer als 1,5 sein muß, wobei die Metallschicht der Dünnfilmwiderstände parallel zur Strömungsrichtung des zu messenden Mediums ausgerichtet ist.

Vorzugsweise beträgt das Länge/Durchmesserverhältnis dieser Durchbohrung mehr als zwei. Weiterhin ist es von Vorteil, wenn das äußere Profil des Schutzrohres im Bereich der Durchbohrung sechseckig ausgebildet ist un die Durchbohrung senkrecht zu zwei zueinander parallel stehenden Flächen verläuft.

Als günstig hat es sich erwiesen, wenn die Dünnfilmwiderstände die Form einer rechteckigen Platte aufweisen, die an einer der kleineren Schmalseiten an einer elektrisch isolierenden Zwei- oder Mehrfachkapillaren befestigt ist, die die Anschlußdrähte für die Dünnfilmwiderstände aufnimmt. Vorzugsweise werden die Dünnfilmwiderstände in einen Schlitz auf der Endfläche der Mehrfachkapillaren eingesetzt und mit einem Glaslot befestigt.

Bei Messungen in korrosiven Medien ist es von Vorteil, die Metallschicht der Dünnfilmwiderstände mit einer dünnen Platte aus einem elektrisch isolierenden Material abzudecken, die auf der Metallschicht vorzugsweise mit einer Schicht aus einer hochschmelzenden Glaskeramik und einer Schicht aus einem hochschmelzenden Glaslot verbunden ist.

Es hat sich überraschenderweise gezeigt, daß die Meßergebnisse dieser Massenstrommeßvorrichtung nur eine sehr geringe Vorlaufabhängigkeit zeigen und außerdem nicht empfindlich von der genau parallelen Ausrichtung der Dünnfilmwiderstände zur Strömungsrichtung sind. Man erzielt eine hohe Meßgenauigkeit in einem großen Meßbereich bei schneller Ansprechzeit.

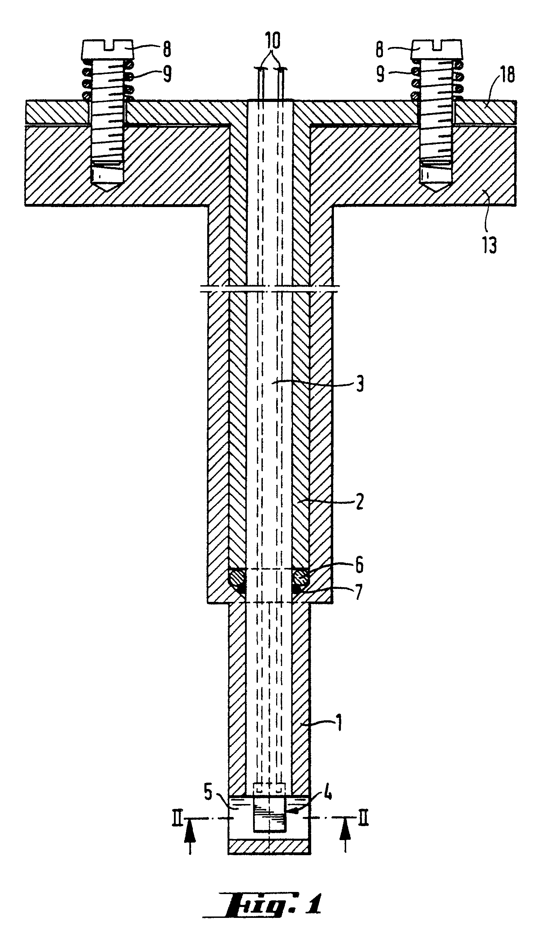

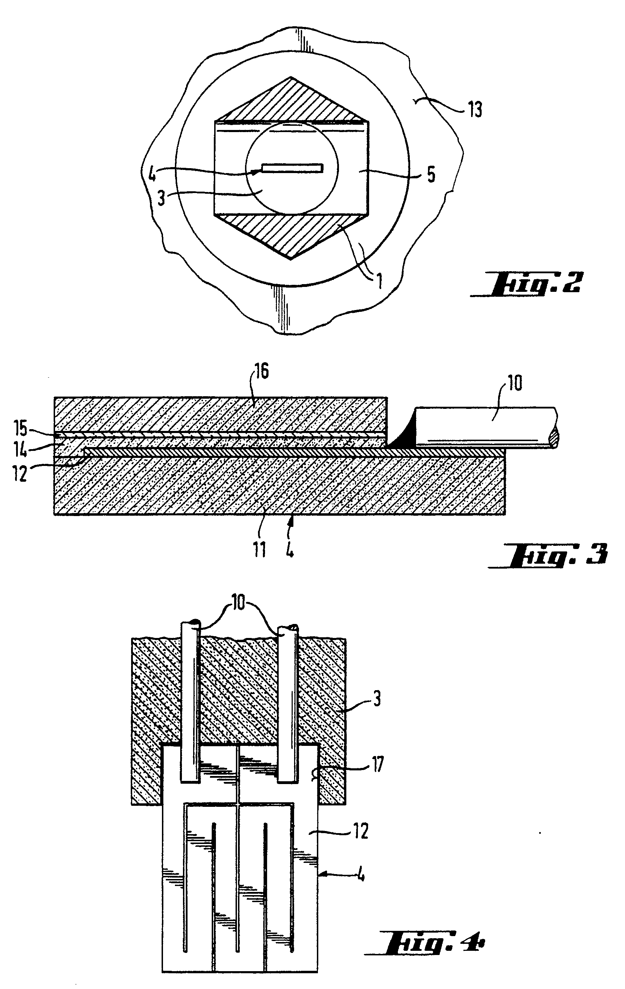

Die Fig. 1 bis 4 zeigen schematisch eine beispielhafte Ausführungsform der erfindungsgemäßen Vorrichtung. Fig. 1 zeigt einen Längsschnitt durch einen Meßfühler mit Schutzrohr, Dünnfilmwiderstand und Anschlußleitungen, Fig. 2 einen Querschnitt im Bereich der Durchbohrung. Fig. 3 den Aufbau eines Dünnfilmwiderstandes mit Abdeckung und Fig. 4 die Befestigung des Dünnfilmwiderstandes an der Mehrfachkapillaren.

Die Meßfühler für den Meßwiderstand, wie auch für den Referenzwiderstand bestehen aus einem Schutzrohr 1, einem Einsteckrohr 2 und einer Mehrfachkapillaren 3, an der der Dünnfilmwiderstand 4 befestigt ist. Das Schutzrohr 1 ist ein unten geschlossenes Rohr, das in seinem unteren Teil einen sechseckigen Querschnitt und im oberen Teil einen runden Querschnitt aufweist. Innerhalb des sechseckigen Rohrquerschnittes ist eine transversale Durchbohrung 5 angebracht, die senkrecht zu zwei zueinander parallel liegenden Seitenflächen des sechseckigen Profils verläuft. Der Meßfühler ist so in die Rohrleitung eingebaut, daß die Durchbohrung 5 parallel zur Strömungsrichtung des zu messenden Mediums verläuft.

Das Verhältnis von Länge zu Durchmesser der Durchbohrung 5 ist mindestens 1,5. Der Innendurchmesser von Schutzrohr 1 ist im unteren Teil kleiner als im oberne Teil und bildet an der Übergangsstelle eine Fase zum Anpressen einer Dichtung 6. Am oberen Teil des Schutzrohres 1 ist ein Flansch 13 angebracht, an dem das Einsteckrohr 2 ebenfalls mit einem Flansch 18 befestigt ist.

Das Einsteckrohr 2 ist ein unten offenes Rohr, dessen Außendurchmesser und Länge so bemessen sind, daß es in den oberen Teil des Schutzrohres 1 mit rundem Profil eingesetzt werden kann. Der Innendurchmesser ist gleich dem des Schutzrohres 1 im unteren Bereich mit sechseckigem Profil.

Im Einsteckrohr 2 ist eine Mehrfachkapillare 3 aus Keramik befestigt. Die Länge der Mehrfachkapillaren 3 ist so bemessen, daß sie vom Einsteckrohr 2 in den unteren Teil des Schutzrohres 1 mit sechseckigem Profil ragt und bis an den oberen Rand der transversalen Durchbohrung 5 reicht. An diesem Ende der Mehrfachkapillaren 3 ist der Dünnfilmwiderstand 4 befestigt, der die Form einer dünnen rechteckigen Platte hat. Er ist an einer der kleineren Schmalseiten an der Mehrfachkapillaren befestigt und so aufgerichtet, daß die metallisierte Oberfläche parallel zur Achse der Durchbohrung 5 verläuft. Die Mehrfachkapillare 3 nimmt die zwei Anschlußdrähte 10 des Dünnfilmwiderstands 4 auf.

Die Abdichtung zwischen Schutzrohr 1 und Einsteckrohr 2 einerseits und Schutzrohr 2 und Mehrfachkapillaren 3 andererseits wird durch zwei Dichtringe 6 und 7 aus wärmebeständigem und korrosionsfestem Material hergestellt. Sie sitzen passend auf der Mehrfachkapilaren 3 am Ende des Einsteckrohrs 2 und werden vom Einsteckrohr 2 gegen die Fase im Innern des Schutzrohrs 1 gepreßt. Um auch bei eventuellem Fließen des Dichtmaterials immer den erforderlichen Anpreßdruck gewährleisten zu können, ist die Verschraubung 8 zwischen Schutzrohrflansch 13 und Einsteckrohrflansch 18 mit einer Feder 9 versehen.

Der temperaturabhängige Dünnfilmwiderstand 4, der durch eine elektronische Regelschaltung in bekannter Weise so mit Strom versorgt wird, daß seine Temperatur relativ zur Medientemperatur konstant gehalten wird, wird mit Ausnahme einer Schmalseite von diesem Medium umspült. Dies hat ein schnelles Ansprechen bei Änderung des Massenstroms oder der Medientemperatur zur Folge und ergibt eine große Empfindlichkeit infolge der großen Fläche, die am Wärmeaustausch mit dem Medium beteiligt ist. Da der Dünnfilmwiderstand mit seiner Oberfläche parallel zur Strömungsrichtung ausgerichtet ist, ist ein Verschmutzungseinfluß nur auf der schmalen Anströmkante zu erwarten und deshalb vernachlässigbar.

Das Anbringen des Dünnfilmwiderstandes 4 in der Durchbohrung 5 hat mehrere Vorteile. Neben dem Schutz gegen mechanische Einwirkungen stellt die Durchbohrung 5 einen definierten Strömungskanal dar, der überraschenderweise die Anordnung relativ unempfindlich gegen Störungen im Strömungsprofil macht. Ebenso unerwartet sorgt er dafür, daß unvermeidliche Einbauungenauigkeiten, die Parallelität von Durchbohrung 5 und Strömungsrichtung betreffen, nur unbedeutende Änderungen im Meßergebnis verursachen. Für beides ist es wesentlich, daß das Verhältnis von Länge zu Durchmesser der Durchbohrung 5 mindestens 1,5 vorzugsweise mindestens 2 ist. In Versuchen mit Dünnfilmwiderständen, die nicht in einer solchen Durchbohrung angebracht waren, ergaben kleinste Winkeländerungen bezüglich der Parallelität bereits deutliche Meßwertabweichungen.

Fig. 3 zeigt den bevorzugten Aufbau des Dünnfilmwiderstands 4 im Detail. Auf einer dünnen Platte 11 aus elektrisch isolierendem, gut wärmeleitenden Material, vorzugsweise Keramik, ist die Dünnfilmmetallschicht 12, vorzugsweise Platin oder Iridium, aufgebracht. Dies kann mit bekannten Verfahren, z.B. durch Hochfrequenz-Sputtertechnik erfolgen. Die Dünnfilmschicht 12 ist srukturiert, wobei den größten Teil der Fläche die eigentliche Widerstandsschicht einnimmt. Am Endbereich der Dünnfilmschicht 12 sind zwei Anschlußdrähte 10 kontaktiert. Die Dünnfilmschicht 12 ist mit einer dünnen Schicht 14 aus Glaskeramik abgedeckt, deren Ausdehnungskoeffizient dem der Keramik der Platte 11 angepaßt ist und die auch bei Temperaturen bis 600° C keine Änderungen in der Widerstandsschicht, z.B. durch Diffusion von Ionen, hervorruft.

In der Glaskeramik treten jedoch häufig mikroskopisch feine Risse und Poren auf. Um die Widerstandsschicht auch dagegen zu schützen, wird mittels einer hauchdünnen Schicht 15 aus einem hochschmelzenden Glaslot eine dünne Platte 16 aus Keramik auf der Glaskeramikschicht 14 befestigt.

Die Mehrlochkapillare 3 weist an ihrer Stirnfläche einen Schlitz 17 auf, der so dimensioniert ist, daß er den Anschlußteil des Dünnfilmwiderstandes 4 mit den Anschlußdrähten 10 aufnehmen kann. Der Dünnfilmwiderstand 4 wird in den Schlitz 17 der Mehrfachkapillaren 3 eingeführt, wobei die Anschlußdrähte 10 von der Mehrfachkapillaren 3 aufgenommen werden. Die Befestigung erfolgt durch ein hochschmelzendes Glaslot mit passendem Ausdehnungskoeffizient, mit dem der Schlitz ausgefüllt wird. Mit dieser Halterung ist einmal eine mechanisch stabile Verbindung von Dünnfilmwiderstand 4 und Mehrfachkapillaren 3 gegeben. Die relativ geringe Wärmeleitfähigkeit des verwendeten Glaslots bewirkt außerdem, daß der Wärmefluß vom Dünnfilmwiderstand 4 in die Mehrfachkapillare 3 begrenzt wird und ein schnelles Ansprechen bei Durchflußänderungen gewährleistet ist.

Die hier beschriebene Ausführung eines Meßwiderstandes gilt auf die gleiche Weise auch für den entsprechenden Referenzwiderstand.

## Ansprüche

1. Vorrichtung zur thermischen Massenstrommessung von Gasen und Flüssigkeiten in Rohrleitungen, mit mindestens zwei temperaturabhängigen Dünnfilmwiderständen (4), die als Meß- und Referenzwiderstände Teil einer Brückenschaltung sind, in Wärmekontakt mit dem strömenden Medium stehen und von denen mindestens einer mit Hilfe einer Regelschaltung elektrisch beheizt wird,
dadurch gekennzeichnet,
daß die Dünnfilmwiderstände (4) samt Anschlußleitungen jeweils von einem Schutzrohr (1) mit einem auf der meßseite abgeschlossenen Ende umgeben sind, das im Bereich des Dünnfilmwiderstandes (4) in Strömungsrichtung mit einer zylindrischen, senkrecht zur Schutzrohrachse verlaufenden Durchbohrung (5) versehen ist, deren Verhältnis Länge zu Durchmesser größer als 1,5 sein muß, wobei die Metallschicht der Dünnfilmwiderstände (4) parallel zur Strömungsrichtung des zu messenden Mediums ausgerichtet ist.

2. Vorrichtung nach Anspruch 1,
dadurch gekennzeichnet,
daß das Länge/Durchmesserverhältnis der Durchbohrung (5) mehr als zwei beträgt.

3. Vorrichtung nach Anspruch 1 oder 2,
dadurch gekennzeichnet,
daß das äußere Profil des Schutzrohres (1) im Bereich der Durchbohrung (5) sechseckig ausgebildet ist und die Durchbohrung (5) senkrecht zu zwei zueinander parallel stehenden Flächen verläuft.

4. Vorrichtung nach den Ansprüchen 1 bis 3,
dadurch gekennzeichnet,
daß die Dünnfilmwiderstände (4) die Form einer rechteckigen Platte aufweisen, die an einer der kleinen Schmalseiten an einer elektrisch isolierenden Zwei- oder Mehrfachkapillaren (3) befestigt ist, die die Anschlußdrähte (10) aufnimmt.

5. Vorrichtung nach Anspruch 4,
dadurch gekennzeichnet,
daß die Dünnfilmwiderstände (4) in einem Schlitz (17) auf der Endfläche der Mehrfachkapillaren (3) eingesetzt und mit einem Glaslot befestigt sind.

6. Vorrichtung nach den Ansprüchen 1 bis 5,
dadurch gekennzeichnet,
daß die Metallschicht (12) der Dünnfilmwiderstände (4) mit einer dünnen Platte (16) aus einem elektrisch isolierenden Material abgedeckt ist.

## Claims

**1.** Apparatus for the thermal mass flow measurement of gases and liquids in pipes, comprising at least two temperature dependent thin film resistors (4) which serve as measuring and reference resistors forming part of a bridge circuit and are in thermal contact with the flowing medium, at least one of which resistors is electrically heated by means of a control circuit, characterised in that the thin film resistors (4) together with connecting leads are surrounded by a protective tube (1) which is closed at the measuring end and is perforated by a cylindrical bore (5) extending perpendicularly to the axis of the protective tube in the region of the thin film resistor (4) in the direction of flow, the ratio of length to diameter of which bore (5) must be greater than 1.5, the metal layer of thin film resistors (4) extending parallel to the direction of flow of the medium to be measured.

**2.** Apparatus according to Claim 1, characterised in that the length/diameter ratio of the bore (5) is greater than 2.

**3.** Apparatus according to Claim 1 or Claim 2, characterised in that the external profile of the protective tube (1) is hexagonal in the region of the bore (5) and the bore (5) extends perpendicularly to two surfaces which are parallel to one another.

**4.** Apparatus according to Claims 1 to 3, characterised in that the thin film resistors (4) have the form of a rectangular plate which is attached at one of its short sides to an electrically insulating double or multiple capillary (3) containing the connecting wires (10).

**5.** Apparatus according to Claim 4, characterised in that the thin film resistors (4) are inserted in a slot (17) at the end face of the multiple capillaries (3) and are fixed by a glass solder.

**6.** Apparatus according to Claims 1 to 5, characterised in that the metal layer (12) of the thin film resistors (4) is covered with a thin plate (16) of an electrically insulating material.

## Revendications

**1.** Dispositif pour la mesure thermique du débit massique de gaz et de liquides dans des conduites, dispositif comportant au moins deux résistances (4), dépendant de la température, en film mince, et qui constituent la résistance de mesure et la résistance de référence faisant partie d'un montage en pont, ces résistances étant en contact thermique avec le fluide qui s'écoule et au moins l'une d'elles est chauffée électriquement par un circuit de régulation, dispositif caractérisé en ce que les résistances en film mince (4) ainsi que les lignes de raccordement sont respectivement entourées d'un tube protecteur (1) avec une extrémité raccordée du côté de la mesure, et dans la zone de la résistance en film mince (4), le tube comporte un perçage traversant (5) cylindrique, perpendiculaire à l'axe du tube protecteur et dont le rapport entre la longueur et le diamètre doit être supérieur à 1,5, la couche métallique des résistances en film mince (4) étant parallèle à la direction de l'écoulement du fluide à mesurer.

**2.** Dispositif selon la revendication 1, caractérisé en ce que le rapport longueur diamètre du perçage traversant (5) est supérieur à 2.

**3.** Dispositif selon la revendication 1 ou 2, caractérisé en ce que le profil extérieur du tube protecteur (1) est de forme hexagonale au niveau du perçage traversant (5) et ce perçage (5) est perpendiculaire à deux surfaces parallèles.

**4.** Dispositif selon les revendications 1 à 3, caractérisé en ce que les résistances en film mince (4) ont la forme d'une plaque rectangulaire qui est fixée par l'un des petits côtés à deux ou plusieurs tubes capillaires (3) isolants électriques recevant les fils de branchement (10).

**5.** Dispositif selon la revendication 4, caractérisé en ce que les résistances en film mince (4) sont logées dans une fente (17) dans la surface d'extrémité des tubes capillaires multiples (3) et sont fixées par une soudure de verre.

**6.** Dispositif selon les revendications 1 à 5, caractérisé en ce que la couche métallique (12) des résistances en film mince (4) est recouverte d'une plaque mince (16) en un matériau isolant électrique.

**Fig. 1**

*Fig.2*

*Fig.3*

*Fig.4*